(19) Europäisches Patentamt
European Patent Office
Office européen des brevets

(11) EP 2 058 339 A1

(12) EUROPEAN PATENT APPLICATION

(43) Date of publication:
13.05.2009 Bulletin 2009/20

(51) Int Cl.:
*C08F 210/02* (2006.01) *C08F 210/16* (2006.01)
*C08F 210/18* (2006.01) *C08F 236/20* (2006.01)

(21) Application number: 07254417.4

(22) Date of filing: 09.11.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(71) Applicant: Borealis Technology OY
06101 Porvoo (FI)

(72) Inventors:
- Follestad, Arild
  3960 Stathelle (NO)
- Doshev, Petar
  3920 Porsgrunn (NO)
- Bjaland, Anne, Britt
  3711 Skien (NO)
- Sultan, Bernt-Åke
  44442 Stenungsund (SE)
- Palmlöf, Magnus
  42671 Västra Frölunda (SE)
- Lundquist, Morten
  3916 Porsgrunn (NO)

(74) Representative: Gordon, Kirsteen Helen
Frank B. Dehn & Co.
St Bride's House
10 Salisbury Square
London
EC4Y 8JD (GB)

(54) **Polyethylene copolymer**

(57) This invention relates to an ethylene polymer having a weight average molecular weight of at least 120,000 comprising 1-50 tertiary double bonds per 10,000 carbon atoms.

FIGURE 1a

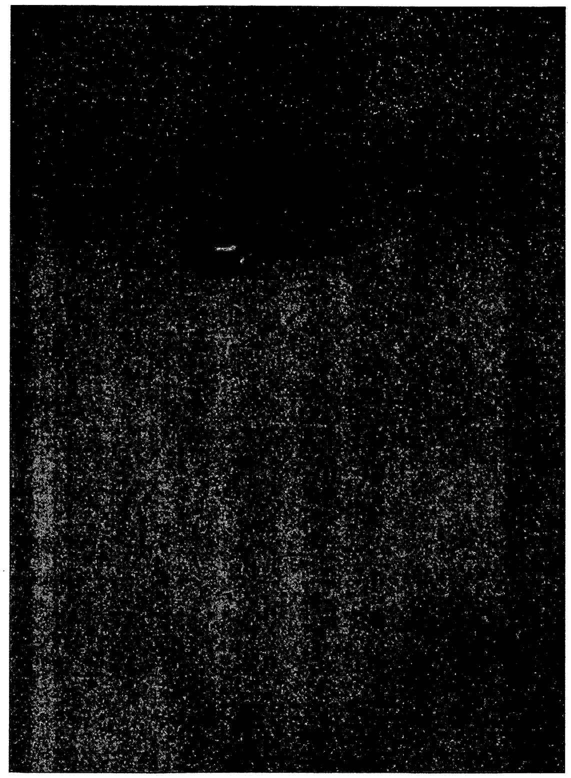

EP 2 058 339 A1

FIGURE 1b

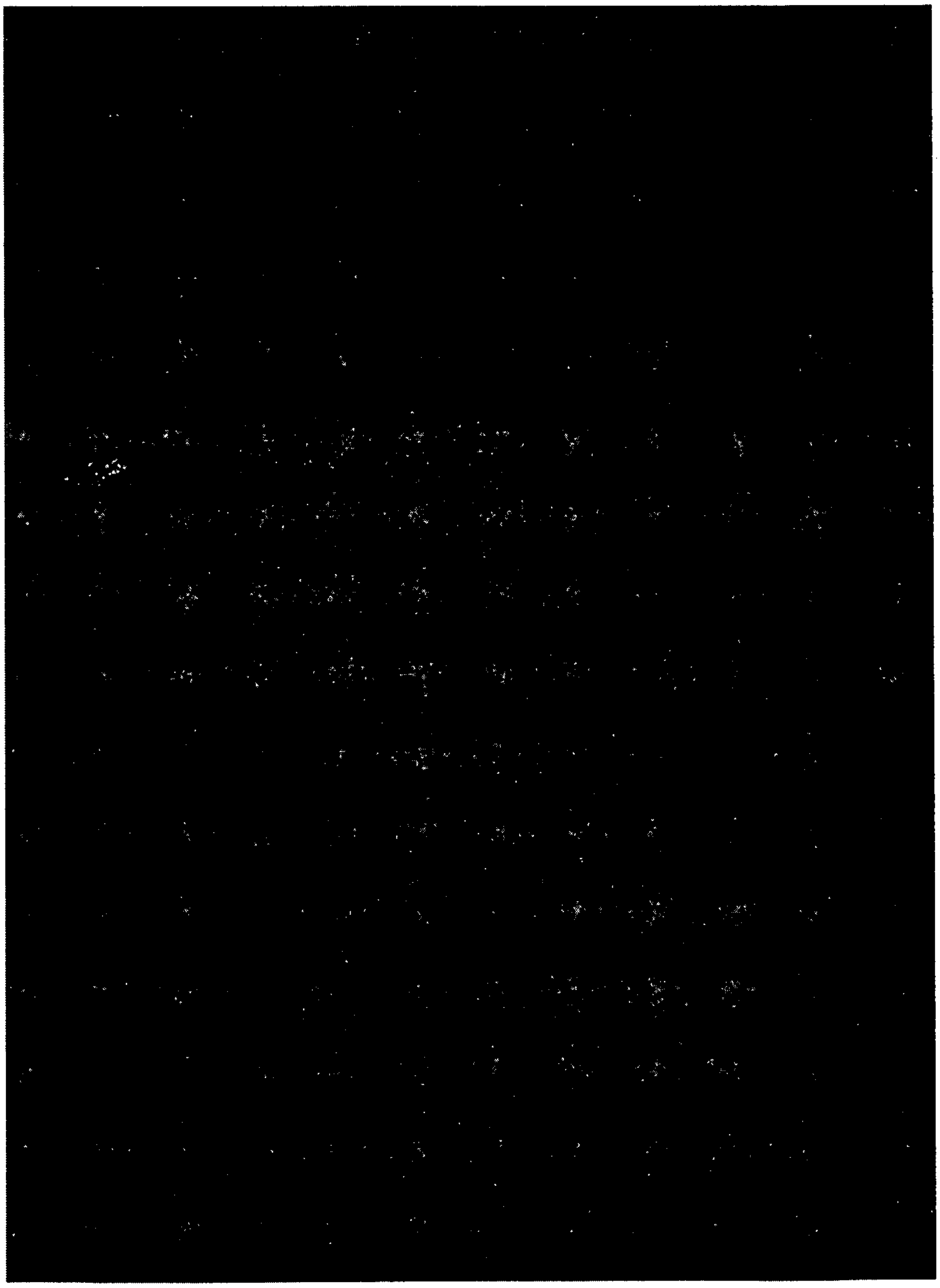

**Description**

FIELD OF THE INVENTION

The present invention relates to an ethylene polymer comprising tertiary double bonds, to processes for making said polymer and to uses of said polymer. The invention also relates to a process for making long chain branched ethylene polymer from said ethylene polymer comprising tertiary double bonds, to said long chain branched ethylene polymer *per se* and to uses of said long chain branched polymer.

BACKGROUND

Polyethylene having long chain branching is known in the art and exhibits improved melt strength and strain hardening behaviour compared to conventional linear polyethylene. Strain hardening melts are advantageous because if the melt is stretched, it will have a low tendency to rupture. When a non-strain hardening melt is stretched it will begin narrowing at a particular point (called the "neck") and if stretching is continued the neck will become narrower and narrower until rupture occurs. In the case of a strain hardening melt, however, the "neck" becomes the part of the polymer that is most resistant to strain and thus rupture is avoided.

Long chain branching is typically introduced into polyethylene by the introduction of alpha-omega dienes such as 1,7-octadiene during polymerisation. The two double bonds of the diene enables it to participate in polymer chain growth as well as in an additional reaction that facilitates formation of long chain branches. The latter reaction increases the polymer melt strength and improves the melts strain hardening behaviour. Some of the double bonds from the diene units in the polymer may also survive the polymerisation reaction and thus be available to cross link by post polymerisation treatment (e.g. by treatment with peroxide at high temperature or by gamma radiation).

Whilst long chain branched ethylene copolymers produced by this method often exhibit improved melt strength, the polymers do have disadvantages. Relatively high amounts of peroxide and/or levels of gamma radiation are usually required to induce long chain branching and/or cross linking, but these conditions simultaneously cause scission of bonds in the polyethylene backbone. This results in the formation of a low molecular weight fraction which is undesirable.

More significantly, however, copolymers of ethylene and alpha,omega dienes tend to be inhomogeneous and/or to produce inhomogeneous products when treated with peroxide or gamma radiation. More specifically these polymers tend to comprise gels. These gels are formed by the inherent branching and cross linking reactions that occur during the polymerisation as well as during post reactor treatment. A gel is typically formed when an increased number of branching and cross linking reactions occur in a certain region of the polymer relative to the polymer as a whole resulting in the formation of a continuous network polymer in a discrete region. Unfortunately there is no easy way to avoid such reactions occurring.

However, the presence of gels in polyethylene causes problems in a number of applications, e.g. in fibre production and in film blowing. It is, for example, advantageous to make polyethylene fibres with polyethylene having long chain branching since its improved melt strain hardening facilitates processing and is clearly beneficial in end use. The occurrence of gels in the polyethylene, however, increases the tendency for fibres to rupture during processing and for dies to become clogged.

A polyethylene that contains gels also has a much poorer appearance than one without gels. This is particularly detrimental in films where even relatively small gels are easily observable after blowing and in coloured products where gels appear as white dots.

A need therefore exists for alternative polyethylene that exhibits high melt strength and strain hardening behaviour.

It has now been surprisingly found that strain hardening polyethylene can be produced without concurrent gel formation. More specifically it has been discovered that ethylene can be copolymerised with small amounts of tertiary dienes to yield strain hardening copolymer that does not contain gels. Furthermore a number of the tertiary double bonds introduced into the copolymer via the diene still exist at the end of polymerisation and these bonds can advantageously be utilised to further improve the strain hardening properties of the polyethylene, e.g. by post reactor treatment to yield further long chain branching. Surprisingly low amounts of tertiary diene are required to provide these advantageous effects.

There are a few disclosures in the prior art of polyethylene containing tertiary double bonds but none suggest that the polyethylene possesses strain hardening behaviour or may be used to obtain a strain hardening polymer. US 4,366,296, for example, discloses unsaturated random copolymers of ethylene, propylene or 4-methyl-1-pentene with a branched 1,4-diene. Examples of suitable branched 1,4-dienes are 4-methyl-1,4-hexadiene and 5-methyl-1,4-hexadiene. The amount of 1,4 diene that may be present in these polymers is 0.01-30 mol%, though only copolymers comprising 1.1-8.4 mol% are actually exemplified. The diene is said to provide the copolymer with pendent double bonds that provide the copolymer with improved properties such as adherence, printability and paintability and which can be

modified by reactions including oxidation, graft polymerisation and cross linking. This suggests therefore that the majority of diene monomers undergo only a single reaction during polymerisation and thus that little or no long chain branching or cross linking occurs. Indeed there is no mention of long chain branching in US 4,366,296 and there is also no disclosure whatsoever of the melt strength or strain hardening behaviour of the resulting polymers.

Similarly EP-A-0552946 discloses rubbers that are copolymers of ethylene/α-olefin and 7-methyl-1,6-octadiene. The amount of 7-methyl-1,6-octadiene that may be present in these polymers is 0.4-25 %mol though only copolymers comprising 1.8-3.5 mol% are actually exemplified. The aim in EP-A-0552946 is to provide a rubber that has excellent low temperature flexibility as well as heat and weathering resistance and a high vulcanisation speed. The fact that vulcanisation speed is improved implies that many of the diene monomers present therein participate in only a single reaction during polymerisation and thus that double bonds are available thereafter to facilitate vulcanisation (i.e. that little or no long chain branching or cross linking occurs during polymerisation). As in US 4,336,296 there is no mention whatsoever of the melt strength or strain hardening behaviour of the resulting polymers.

## SUMMARY OF INVENTION

Viewed from a first aspect the invention provides an ethylene polymer having a weight average molecular weight of at least 120,000 comprising 1-50 tertiary double bonds per 10,000 carbon atoms.

Viewed from another aspect the invention provides a process for preparing an ethylene polymer as hereinbefore defined comprising copolymerising ethylene and a tertiary diene.

Viewed from another aspect the invention provides a composition comprising an ethylene polymer as hereinbefore defined.

Viewed from a further aspect the invention provides an article (e.g. a moulded or extruded article) comprising an ethylene polymer as hereinbefore defined.

Viewed from a further aspect the invention provides a process for preparing an article as hereinbefore defined comprising moulding or extruding an ethylene polymer as hereinbefore defined.

Viewed from a still further aspect the invention provides use of an ethylene polymer as hereinbefore defined in moulding or extrusion.

Viewed from a yet a further aspect the invention provides use of an ethylene polymer as hereinbefore defined in the manufacture of a long chain branched ethylene polymer.

Viewed from a still further aspect the invention provides a long chain branched ethylene polymer obtainable from an ethylene polymer as hereinbefore defined by post reactor treatment (e.g. with a free radical initiator).

Viewed from a yet further aspect the invention provides a process for preparing a long chain branched ethylene polymer as hereinbefore defined comprising:

(i) copolymerising ethylene and a tertiary diene to produce an ethylene polymer having a weight average molecular weight of at least 120,000 comprising 1-50 tertiary double bonds per 10,000 carbon atoms; and
(ii) treating said copolymer (e.g. with a free radical initiator) to introduce long chain branching.

Viewed from a still further aspect the invention provides a composition comprising a long chain branched ethylene polymer as hereinbefore defined.

Viewed from a further aspect the invention provides use of a long chain branched ethylene polymer as hereinbefore defined in moulding or extrusion.

A process for preparing an article comprising moulding or extruding a long chain branched ethylene polymer as hereinbefore defined forms a further aspect of the invention.

Moulded or extruded articles comprising a long chain branched ethylene polymer as hereinbefore defined form a final aspect of the invention.

## DETAILED DESCRIPTION

### Definitions

By the term "ethylene polymer" is meant herein a polymer that comprises at least 50 mol% units derived from ethylene.

By the term "long chain branched ethylene polymer" is meant herein a polymer wherein a proportion (e.g. 1-40 %wt) of the polymer chains has at least one long chain branch. The long chain branched ethylene polymer may or may not form a continuous network throughout the polymer. Polymers having a continuous network are referred to herein as cross linked polymers. Preferred long chain branched ethylene polymers of the present invention are not cross linked. Preferred polymers are soluble in decalin at 135 °C.

As used herein the term "ethylene polymer" is also used to refer to the polymer that results from polymerisation (i.e. the as-polymerised product) and the term "long chain branched ethylene polymer" is used to refer to the polymer that results from post reactor treatment. Nevertheless the ethylene polymer as described herein does itself comprise long chain branching. The level and/or extent of this branching is increased in the long chain branched ethylene polymer described herein.

By the term "tertiary double bond" is meant herein a double bond that is substituted by three non-hydrogen groups (e.g. by three alkyl groups). Herein tertiary double bonds may be designated by the term "$RCH=R_2$" wherein R is not hydrogen (e.g. R is hydrocarbyl, especially alkyl, e.g. $C_{1-6}$ alkyl). By the phrase "x tertiary double bonds per 10,000 carbon atoms" is meant herein that x tertiary double bonds are present per 10,000 carbon atoms present in the backbone or main chain of the polymer.

By the term "diene" is meant herein a compound comprising two double bonds. By the term "tertiary diene" is meant a diene wherein one of the double bonds is a tertiary double bond.

By the term "long chain branch" is meant herein a branch comprising at least 20 carbon atoms, more preferably at least 100 carbon atoms, e.g. at least 1000 carbon atoms.

The term "ethylene homopolymer" is intended to encompass polymers which consist essentially of repeat units deriving from ethylene. Homopolymers may, for example, comprise at least 99 %, more preferably at least 99.9 %, e.g. 100 % by weight of repeat units deriving from ethylene.

The term "ethylene copolymer" is intended to encompass polymers comprising repeat units from ethylene and at least one other monomer. In typical copolymers at least 1 %, preferably at least 5 %, e.g. at least 10 % by weight of repeat units derive from at least one monomer other than ethylene.

The term "gel" is meant herein to refer to an area of at least 50 microns in size in its largest dimension which comprises polymer having a higher molecular weight and a higher viscosity than the surrounding polymer matrix. Gel formation may be caused by cross linking. Gels can be observed by microscopy as described in the examples herein.

The term "gel free" as used herein is intended to mean that no gels are observed in the polymer when a 2 g pellet of polymer is melt pressed to form a plaque having a diameter of 12 mm and examined by light microscopy using a 50X magnification.

As used herein, the term "strain hardening" refers to the strain hardening behaviour of the polymer at 180 °C and a certain Hencky strain rate (e.g. 0.3, 1.0 or 10 $s^{-1}$). It is expressed by the formula:

$$SH_{1.5/1.0} = (\log(\eta^e_{1.5}) - \log(\eta^e_{1.0})/(\log(1.5) - \log(1.0))$$

where log is Brigg's logarithm, and $\eta^e_{1.5}$ and $\eta^e_{1.0}$ are the elongation viscosities at 1.5 and 1.0 % strain respectively.

A polymer with a higher value of SH is more strain hardening than a polymer with a lower SH value.

Ethylene Polymer Properties

The ethylene polymer of the invention preferably comprises at least 80 mol% units derived from ethylene. Still more preferably the ethylene polymer comprises at least 95 mol% units, especially preferably at least 99 mol% units derived from ethylene (e.g. 97 to 99.9 mol% units derived from ethylene).

The ethylene polymer further comprises 1-50 tertiary double bonds per 10,000 carbon atoms. Still more preferably the ethylene polymer comprises 1-25 tertiary double bonds per 10,000 carbon atoms (e.g. 1-20 tertiary double bonds per 10,000 carbon atoms).

In preferred ethylene polymers of the invention, the tertiary double bonds comprise a unit derived from or originating from a tertiary diene. Preferred polymers of the invention comprise less than 0.5 mol%, more preferably 0.001-0.45 mol%, still more preferably 0.005-0.4 mol%, of a unit derived from a tertiary diene. Indeed an advantage of the ethylene polymer of the invention is that only low amounts of tertiary diene (e.g. <0.5 mol%) are required to provide a polymer that possesses strain hardening behavior. As such low amounts of diene are used the catalyst activity in the polymerisation reaction is essentially unaffected so productivity remains high and the cost of the polymer can be minimised by using a relatively low amount of catalyst.

Preferred ethylene polymers of the present invention comprise units derived from a tertiary diene that comprises at least 5 carbon atoms in its main chain (e.g. 5 to 20 carbon atoms in its main chain). Preferred tertiary dienes are non-conjugated. Further preferred tertiary dienes are 1,3, 1,5 or 1,7-dienes. Preferably the tertiary diene is not a 1,4-diene. Some 1,4-dienes (e.g. 5-methyl-1,4-hexadiene) have comparable volatility to preferred comonomers and, as a result, it is difficult to separate unconverted diene from unconverted comonomer post-polymerisation.

Particularly preferred polymers of the present invention comprise units derived from a tertiary diene of formula (I):

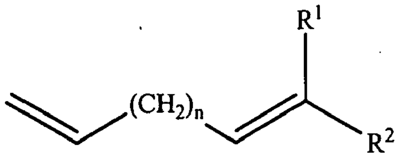

(I)

wherein n is an integer from 0 to 20, preferably 0 to 4 (e.g. 0 or 3); and
$R^1$ and $R^2$ are each independently a $C_{1-6}$ alkyl group.

Unexpectedly, in the dienes of formula (I), the R groups only partially "shield" the tertiary double bond during the polymerisation reaction so some, though not all, undergo reaction with ethylene. This was surprising in light of the teaching of the prior art as hereinbefore discussed but is highly beneficial. As a result of partial shielding, the ethylene polymer that is produced by the polymerisation has some long chain branching and exhibits strain hardening behaviour. At the same time, however, the partial shielding ensures that at least some tertiary double bonds are present in the final polymer which, under certain conditions (e.g. post reactor heating or treatment with a free radical initiator), will react. In particular the post reactor reaction may be used to form further long chain branches in the ethylene polymer and thus provide increased strain hardening.

Advantageously, however, both the polymerisation reaction and post reactor treatment reaction can be carried out without gel formation. In other words, the dienes of formula (I), especially when used in certain amounts, provide the ideal level of reactivity that allows long chain branching to be produced during polymerisation and optionally by post reactor treatment without the occurrence of uncontrolled reactions leading to the formation of a gel.

Especially preferred polymers of the present invention comprise units derived from a tertiary diene of formula I wherein $R^1$ and $R^2$ are $C_{1-3}$ alkyl (e.g. methyl). Preferably $R^1$ and $R^2$ are identical.

Representative examples of tertiary dienes of formula I include 4-methyl-1,3-pentadiene (MPD), 5-methyl-1,4-hexadiene, 6-methyl-1,5-heptadiene, 7-methyl-1,6-octadiene (MOD), 8-methyl-1,7-nonadiene and 9-methyl-1,8-decadiene. Particularly preferred dienes of formula I are MPD and MOD, especially MOD.

The ethylene polymer of the invention may additionally comprise units from one or more other monomers. Units may, for example, be present that derive from α-olefins having 3-10 carbon atoms. Examples of suitable monomers include propene, but-1-ene, pent-1-ene, hex-1-ene and oct-1-ene. But-1-ene, hex-1-ene and oct-1-ene are preferred.

Preferred ethylene polymers of the invention comprise 0-40 mol% of units deriving from α-olefin having 3-10 carbon atoms. Still further preferred ethylene polymers comprise 0.5-20 mol%, especially less than 10 mol%, e.g. less than 5 mol% of units deriving from α-olefin having 3-10 carbon atoms. Preferred ethylene polymers are not rubbers. Further preferred ethylene polymers comprise less than 10 mol% units deriving from propylene. Particularly preferred ethylene polymers consist essentially (e.g. consist of) units derived from ethylene and a tertiary diene.

Preferably the weight average molecular weight of the ethylene polymer is in the range 150,000 to 800,000, more preferably 200,000 to 600,000, still more preferably 300,000 to 450,000, e.g. about 350,000 to 440,000. An advantage of the polymers of the invention is that high molecular weights can be attained. This is because only low amounts (e.g. <0.5 mol%) of diene need to be incorporated into the polymer to achieve strain hardening behaviour.

Preferably the MWD (ratio of the weight average molecular weight to the number average molecular weight) of the ethylene polymer of the invention is in the range of 2-35, preferably 2.3-30, more preferably 2.5-25. A particularly preferred ethylene polymer of the invention (e.g. reactor made ethylene polymer) has a MWD of 2-12, preferably 2.2-10, more preferably 2.3-8, e.g. 2.4-6.

The ethylene polymer of the invention may be unimodal or multimodal (e.g. bimodal) with respect to molecular weight distribution. The molecular weight profile of a multimodal polymer does not comprise a single peak but instead comprises the combination of two or more peaks (which may or may not be distinguishable) centred about different average molecular weights as a result of the fact that the polymer comprises two or more separately produced components under different polymerisation conditions.

When the ethylene polymer is multimodal, its components may be ethylene homopolymers or ethylene copolymers. Preferably, however, in such polymers the ethylene polymer components are different copolymers. In multimodal ethylene polymers at least 20 wt%, more preferably at least 30 wt%, still more preferably at least 40 wt% of each of at least two (e.g. two) ethylene component (e.g. homopolymer and copolymer) is present based on the total weight of the polymer.

In preferred bimodal ethylene polymers of the invention, the ratio of the weight average molecular weight of the lower molecular component to the higher molecular weight component is 0.03-0.5, more preferably 0.07-0.3. In further preferred bimodal ethylene polymers, the ratio of the molar content of α-olefin in the lower molecular weight

component to the higher molecular weight component is less than 0.3, more preferably less than 0.1.

In some embodiments the ethylene polymer of the present invention is preferably unimodal with respect to molecular weight distribution. In other embodiments the ethylene polymer is preferably multimodal (e.g. bimodal) with respect to molecular weight distribution.

The ethylene polymer of the invention preferably has a melt flow rate ($MFR_2$) in the range 0.01 to 50 g/10 min, preferably 0.05 to 20 g/10 min, more preferably 0.1 to 10 g/10 min. Preferably the melt flow rate ($MFR_2$) of the ethylene polymer is less than 1 g/10 min. The ethylene polymer of the invention preferably has a melt flow rate ($MFR_{21}$) in the range 0.1 to 100 g/10 min, preferably 0.5 to 80 g/10 min, more preferably 2 to 60 g/10 min. Preferably the melt flow rate ($MFR_{21}$) of the ethylene polymer is less than 50 g/10 min.

The polyethylene polymer of the invention preferably has a density in the range 900-980 kg/m$^3$, more preferably 920-970 kg/m$^3$, e.g. about 940-960 kg/m$^3$. The density of the ethylene polymer of the invention is advantageously high, e.g. >930 kg/m$^3$. The ethylene polymer of the invention is therefore preferably an HDPE. As a result, the mechanical properties (e.g. stiffness) characteristic of HDPE are exhibited by the polymers of the invention.

The ethylene polymer preferably has a melting point of greater than 115°C, more preferably greater than 120 °C, still more preferably greater than 124 °C (e.g. around 124 to 130 °C).

The ethylene polymer is also preferably crystalline, e.g. having a crystallinity of the order of 40 to 80 %, e.g. 45 to 75 %.

The ethylene polymer of the invention is preferably homogeneous in structure (e.g. no gels are visible under a microscope as hereinbefore defined). Preferably the ethylene polymer is soluble in decalin at 135 °C. Particularly preferably the ethylene polymer of the present invention has less than 0.5 % vol gels, still more preferably less than 0.3 % vol gels. Especially preferably the ethylene polymer of the present invention has is gel-free as determined by the method described in the examples.

The ethylene polymer of the present invention surprisingly exhibits strain hardening behaviour. This is unexpected as it was not anticipated that enough tertiary double bonds would participate in reactions leading to long chain branching during the polymerisation reaction. Rather, in light of the teachings in the prior art as discussed hereinbefore, it was expected that the majority of the tertiary double bonds would not react during polymerisation conditions and hence that post reactor treatment would be necessary to create long chain branching. With the ethylene polymers of the present invention, however, strain hardening is present in the as-polymerised product. Optionally the strain hardening may be further increased by post reactor treatment.

Strain hardening behaviour may be characterised by determining the polymers rheological properties, preferably as defined in the examples. As used herein, the strain hardening at a certain Hencky strain rate is expressed as:

$$SH_{1.5/1.0} = (\log(\eta^{e}_{1.5}) - \log(\eta^{e}_{1.0})/(\log(1.5) - \log(1.0))$$

where log is Brigg's logarithm, and $\eta^e_{1.5}$ and $\eta^e_{1.0}$ are the elongation viscosities at 1.5 and 1.0 % strain respectively. The higher the $SH_{1.5/1.0}$ value the greater the level of strain hardening behavior.

Preferably the long chain branched polymer of the present invention has a $SH_{1.5/1.0}$ at a Hencky strain rate of 0.1 s$^{-1}$ of at least 0.3, more preferably at least 0.4, e.g. 0.4 to 0.6

Preferably the long chain branched polymer of the present invention has a $SH_{1.5/1.0}$ at a Hencky strain rate of 1.0 s$^{-1}$ of at least 0.35, more preferably at least 0.45, e.g. 0.4 to 0.6 Preferably the long chain branched polymer of the present invention has a $SH_{1.5/1.0}$ at a Hencky strain rate of 10.0 s$^{-1}$ of at least 0.3, more preferably at least 0.5, e.g. 0.4 to 8.

<u>Preparation of Ethylene Polymer</u>

The ethylene polymer of the present invention may be prepared using any conventional catalyst known in the art.

The ethylene polymer of the invention may be prepared in a single stage polymerisation or by a two or more stage polymerisation.

In a preferred single stage polymerisation a slurry polymerisation is used (e.g. in a loop reactor) in a manner well known in the art. As an example, an ethylene polymer can be produced e.g. in a single stage loop polymerisation process according to the principles given below for the polymerisation of low molecular weight fraction in a loop reactor of a multistage process, naturally with the exception that the process conditions (e.g. hydrogen and comonomer feed) are adjusted to provide the properties of the final polymer. Conventional cocatalysts, supports/carriers, etc. can be used.

In a preferred multi-stage polymerisation ethylene polymer is produced in at least a two-stage polymerization, preferably using the same catalyst, e.g. a single site (metallocene) or Ziegler-Natta catalyst, in each stage. Thus, for

example at least one slurry reactor or at least one gas phase reactor, or any combination thereof, in any order can be employed. Preferably, however, the ethylene polymer is made using a slurry polymerization in a loop reactor followed by a gas phase polymerization in a gas phase reactor.

A loop reactor - gas phase reactor system is marketed by Borealis as a BORSTAR PE reactor system. The ethylene polymer used in the invention is thus preferably formed in a two stage process comprising a first slurry loop polymerisation followed by gas phase polymerisation, preferably in the presence of the same catalyst.

The conditions used in such a slurry-gas phase process are well known. For slurry reactors, the reaction temperature will generally be in the range 60 to 110°C (e.g. 85-110°C). The reactor pressure will generally be in the range 5 to 80 bar (e.g. 50-65 bar). The residence time will generally be in the range 0.3 to 5 hours (e.g. 0.5 to 2 hours). The diluent used will generally be an aliphatic hydrocarbon having a boiling point in the range -70 to +100°C. Preferably the diluent has a boiling point of less than 0 °C. In such reactors, polymerization may if desired be effected under supercritical conditions.

For gas phase reactors, the reaction temperature used will generally be in the range 60 to 115°C (e.g. 70 to 110°C). The reactor pressure will generally be in the range 10 to 25 bar. The residence time will generally be 1 to 8 hours. The gas used will commonly be a non-reactive gas such as nitrogen or low boiling point hydrocarbons such as propane together with monomer (e.g. ethylene and optionally $\alpha$-olefins).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

When a multi (e.g. two) stage polymerisation is carried out, the tertiary diene may be used in all or some (e.g. one) of the reactors. Preferably, however, the diene is at least present during polymerisation in the reactor where the higher molecular weight fraction is made (e.g. in the gas phase reactor). Still more preferably the diene is present during polymerisation in at least two (e.g. all) of the reactors, e.g. in the loop reactor and the gas phase reactor. When diene is present in more than one reactor, preferably no diene is removed between the two stages.

Particularly preferably the sole, or in the case of a multi stage polymerisation final, reactor is a gas phase reactor in which diene is present. This enables a high conversion of diene to be achieved.

Where the higher molecular weight component is made second in a multistage polymerisation it is not possible to measure its properties directly. However, the skilled man is able to determine the density, $MFR_2$ etc of the higher molecular weight component using Kim McAuley's equations. Thus, both density and $MFR_2$ can be found using K. K. McAuley and J. F. McGregor: On-line Inference of Polymer Properties in an Industrial Polyethylene Reactor, AIChE Journal, June 1991, Vol. 37, No, 6, pages 825-835.

The density is calculated from McAuley's equation 37, where final density and density after the first reactor is known.

$MFR_2$ is calculated from McAuley's equation 25, where final $MFR_2$ and $MFR_2$ after the first reactor is calculated. The use of these equations to calculate polymer properties in multimodal polymers is common place.

Whether a single or multiple stage reactor is used, the properties of the ethylene polymer produced with the above-outlined process may be adjusted and controlled with the process conditions as known to the skilled person, for example by one or more of the following process parameters: temperature, hydrogen feed, comonomer feed, ethylene feed, catalyst, type and amount of external donor, split between two or more components of the polymer.

The ethylene polymer may be made using any conventional catalyst; such as a chromium catalyst, single site catalysts, including metallocenes and non-metallocenes as well known in the field, or Ziegler-Natta catalysts as is also known in the art. The preferred are any conventional Ziegler Natta and single site (e.g. metallocene) catalysts. Catalysts may be homogeneous or heterogeneous. Heterogeneous catalysts are preferred (e.g. supported catalysts).

The preparation of the metallocene catalyst can be carried out according or analogously to the methods known from the literature and is within skills of a person skilled in the field. Thus for the preparation see e.g. EP-A-129 368, WO-A-9856831, WO-A-0034341, EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

Preferred Ziegler-Natta catalysts comprise a transition metal component. The transition metal component comprises a metal of Group 4 or 5 of the Periodic System (IUPAC) as an active metal. In addition, it may contain other metals or elements, like elements of Groups 2, 13 and 17. Preferably the catalyst also comprises an activator, e.g. a cocatalyst activator. Examples of suitable activators include aluminium alkyl compounds, aluminium alkyl alkoxy compounds, aluminium alkyl halogenide compounds, boron alkyl compounds and zinc alkyl compounds. Aluminium alkyl compounds (e.g. triethylaluminium (TEAL) and triisobutylaluminium) are especially preferred.

Preferably the transition metal component is a solid. More preferably, it is supported on a support material, such as an inorganic oxide carrier, e.g. silica, or magnesium halide. Examples of such catalysts are given, among others in WO 95/35323, WO 01/55230, WO 2004/000933, EP 810235 and WO 99/51646.

EP-A-0810235 describes preferred catalysts for use in the preparation of the polymer of the invention.

Whether a single stage or multistage polymerisation is carried out, any unconverted diene remaining at the end of the reaction is preferably removed by drying. The resulting polymer powder can then be processed as desired. An advantage of the process hereinbefore described, especially when a supported catalyst is used, is that the polymer powder that results has desirable morphology. In particular the powder has a high bulk density and a weight median average particle size of 200-1000 micrometers which makes the polymer easy to handle.

Ethylene Polymer Composition

The ethylene polymer of the present invention may be mixed with one or more other polymers and/or any conventional additives to form a polymer composition. Representative examples of suitable additives include nucleating agents, heat and light stabilisers, colourants, antistatic agents, antioxidants, carbon black, pigments and flame retardants. A filler (e.g. talc) may also be present.

Long Chain Branched Ethylene Polymer

A highly advantageous feature of the ethylene polymer hereinbefore described is a polymer having increased long chain branching can be produced therefrom by post reactor treatment. The long chain branched ethylene polymers have even better melt strength and strain hardening behaviour than the ethylene polymer comprising tertiary double bonds from which it is made. Moreover the long chain branched polymers are substantially gel-free.

The long chain branched ethylene polymer of the invention is obtainable from an ethylene polymer comprising 1-50 tertiary double bonds per 10,000 carbon atoms as hereinbefore defined by post reactor treatment. Preferred post reactor treated long chain branched ethylene polymers of the invention comprise branches of at least 25 carbon atoms, still more preferably at least 40 carbon atoms (e.g. 20 to 20,000 carbon atoms).

The long chain branched ethylene polymer of the present invention preferably has less than 0.5 % vol gels, more preferably less than 0.3 % vol gels. Particularly preferred long chain branched ethylene polymers of the present invention are gel free (e.g. no gels are determined according to the method described in the examples herein). Long chain branched ethylene polymers that are soluble in decalin at 135 °C are especially preferred.

Preparation of Long chain branched Ethylene Polymer

The long chain branched ethylene polymer may be made from an ethylene polymer comprising 1-50 tertiary double bonds per 10,000 carbon atoms as hereinbefore defined by post reactor treatment. The tertiary double bonds may be reacted by any conventional technique known to the skilled man, e.g. by use of a free radical initiator, use of sulfur or of a sulfur compound or use of radiation. Use of a free radical initiator, preferably a peroxide, is preferred.

In a preferred process for making long chain branched ethylene polymer of the present invention ethylene polymer comprising 1-50 tertiary double bonds as hereinbefore described is mixed with a peroxide (e.g. an organic peroxide). The ethylene polymer treated may be in any form. For example the polymer may be in the form of a powder, granule or pellet. Preferably, however, the polymer is in the form of powder.

The peroxide used in the treatment is preferably decomposable at elevated temperatures. Preferred peroxides are acyl peroxides, alkyl peroxides, hydroperoxides, peresters and/or peroxycarbonates.

Examples of suitable organic peroxides are:

- Acyl peroxides, such as benzoyl peroxide, 4 chlorobenzoyl peroxide, 3 methoxybenzoyl peroxide and/or methylbenzoyl peroxide;
- Alkyl peroxides such as allyl tert butyl peroxide, 2,2 bis(tert-butylperoxybutane), 1,1 bis(tert-butylperoxy)-3,3,5 trimethylcyclohexane, n butyl 4,4 bis(tert-butylperoxy)valerate, diisopropylaminomethyl tert-amyl peroxide, dimethylaminomethyl tert-amyl peroxide, diethylaminomethyl tert-butyl peroxide, dimethylaminomethyl tert-butyl peroxide, 1,1 di(tert-amylperoxy)cyclohexane, tert-amyl peroxide, tert-butyl cumyl peroxide, tert-butyl peroxide, and/or 1 hydroxybutyl n butyl peroxide;
- Peresters and peroxycarbonates, such as butyl peracetate, cumyl peracetate, cumyl perpropionate, cyclohexyl peracetate, di tert-butyl peradipate, di tert-butyl perazelate, di tert-butyl perglutarate, di tert-butyl perphthalate, di tert-butyl persebacate, 4 nitrocumyl perpropionate, 1 phenylethyl perbenzoate, phenylethyl nitroperbenzoate, tert-butyl bicyclo[2.2.1]heptanepercarboxylate, tert-butyl 4 carbomethoxyperbutyrate, tert-butyl cyclobutanepercarboxylate, tert-butyl cyclohexylperoxycarboxylate, tert-butyl cyclopentylpercarboxylate, tert-butyl cyclopropanepercarboxylate, tert-butyl dimethylpercinnamate, tert-butyl 2 (2,2 diphenylvinyl)perbenzoate, tert-butyl 4 methoxyperbenzoate, tert-butyl perbenzoate, tert-butyl carboxycyclohexane, tert-butyl pernaphthoate, tert-butylperoxy isopropyl carbonate, tert-butyl pertoluate, tert-butyl 1 phenylcyclopropylpercarboxylate, tert-butyl 2 propylperpenten-2 oate, tert-butyl 1 methylcyclopropylpercarboxylate, tert-butyl 4 nitrophenylperacetate, tert-butyl nitrophenylperoxycarbamate, tert-butyl N succinimidopercarboxylate, tert-butyl percrotonate, tert-butylpermaleic acid, tert-butyl permethacrylate, tert-butyl peroctoate, tert-butylperoxy isopropyl carbonate, tert-butyl perisobutyrate, tert-butyl peracrylate and/or tert-butyl perpropionate; and mixtures of these peroxides.

The peroxides may be applied in pure form or in a solution of an inert organic solvent. Preferably, the amount of peroxide is 0.05 to 3 wt%, based on the weight of the polymer.

In a preferred process for making long chain branched ethylene polymers of the invention the mixture containing the peroxide and ethylene polymer comprising tertiary double bonds is heated at a temperature of 150 to 300 °C, e.g. at a temperature of from 180-250 °C, more preferably 200-230°C), preferably in an atmosphere comprising inert gas. Still more preferably the atmosphere comprises less than 2000 ppm volume oxygen. This prevents the tertiary double bonds present in the polymer from undergoing oxidation. Rather, under these conditions, the peroxide decomposes to produce free radicals and reactions between these free radicals and the polymer chains occur to form long chain branches.

The resulting long chain branched ethylene polymer is preferably cooled and pelletised.

The heating steps are preferably performed in continuous kneaders or extruders, preferably in twin-screw extruders.

<u>Long Chain Branched Ethylene Polymer Composition</u>

The long chain branched ethylene polymer of the present invention may be mixed with one or more other polymers and/or any conventional additives to form a polymer composition. Representative examples of suitable additives include nucleating agents, heat and light stabilisers, colourants, antistatic agents, antioxidants, carbon black, pigments and flame retardants. A filler (e.g. talc) may also be present.

<u>Applications of Ethylene Polymer, Long Chain Branched Ethylene Polymer and Compositions thereof</u>

The ethylene polymer and long chain branched ethylene polymer of the invention and compositions comprising said polymers may be advantageously used in a wide variety of applications. Examples include moulding and extrusion. Articles that may comprise the polymers of the invention or compositions comprising said polymers include fibres, foams, pipes, films, and moulded articles.

The polymers of the invention are particularly useful in extrusion techniques, e.g. extrusion coating, foam extrusion, and pipe extrusion, since they provide improved melt strength combined with improved drawability of the polymer melt. Articles that may be made by extrusion include films (e.g. blown films and flat films), foamed films, sheets and pipes.

The polymers may also be used in moulding, e.g. blow moulding, stretch blow moulding (SBM), extrusion blow moulding and injection moulding. The polymers are especially useful in blow moulding wherein the higher strain hardening of these polymers is highly advantageous, providing a highly extendable melt which is resistant to rupture. Articles that may be made by blow moulding include bottles and containers.

The polymers may additionally be used to prepare fibres. Fibres may be prepared by fibre extrusion or fibre spinning processes. In particular fibres may be prepared by extruding the polymer, optionally passing the melt through a melt pump, and passing the polymer through parallel dies. Typically the fibres are then drawn off via rolls and stretched continuously in an oven prior to being annealed. High melt strength and strain hardening behaviour is advantageous for this process.

A further advantage of the ethylene polymer of the invention is that in addition to having high melt strength and strain hardening behaviour the polymer also possess adherence, paintability and printability. This is due to the presence of the tertiary double bond which enables further reactions to occur.

The invention will now be further illustrated by the following non-limiting examples and Figures wherein Figure 1 shows the printability of a polymer comprising tertiary double bonds versus a polymer wherein no tertiary double bonds are present.

EXAMPLES

<u>Analytical Tests</u>

Values quoted in the description and examples are measured according to the following tests:

• The melt flow rate (MFR) is determined according to ISO 1133 and is indicated in g/10 min. The MFR is an indication of the melt viscosity of the polymer. The MFR is determined at 190°C for PE and at 230 °C for PP. The load under which the melt flow rate is determined is usually indicated as a subscript, for instance $MFR_2$ is measured under 2.16 kg load, $MFR_5$ is measured under 5 kg load or $MFR_{21}$ is measured under 21.6 kg load.

• Density was measured according to ISO 1183
• The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 μL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene and polyethylene (K: 19 x10-3 dL/g and a: 0.655 for PS, and K: 39 $x10^{-3}$ dL/g and a: 0.725 for PE). All samples were prepared by dissolving 0.5 - 3.5 mg of polymer in 4 mL (at 140 °C) of stabilized TCB (same as mobile phase) and keeping for 2 hours at 140 °C and for another 2 hours at 160 °C with occasional shaking prior sampling in into the GPC instrument.
• Melting temperature ($T_m$), crystallization temperature ($T_c$) and degree of crystallinity ($X_c$) were measured according to ISO11357. The samples were cut from compression molded, 0.2 mm films. The measurements were performed at the following conditions:

| **Stage** | **Temperature Program** | **Heating/Cooling Rate** *°C/min* | **Time** *Min* |
|---|---|---|---|
| 1st heating | -10 to 200 °C | 10 | |
| Isothermal | 200°C | | 5 |
| Cooling | 20 to -10 °C | -10 | |
| Isothermal | -10 | | 1 |
| 2nd heating | -10 to 200 °C | 10 | |

The $T_m$ and $X_c$ were determined from the second heating. The degree of crystallinity (Xc) was calculated using a melting enthalpy of 100 % PE equal to 290 J/g.
• Comonomer content can be determined in a known manner based on Fourier transform infrared spectroscopy (FTIR) determination calibrated with $^{13}C$ - NMR.
• The amount of double bonds was determined by $^1H$ NMR according to the following procedure:

Sample preparation for NMR analysis

A 10 mm NMR tube was filled with approximately 1 mL of orthodichlorobenzene (ODCB) and subsequently approximately 50 -80 mg of polymer was added. Nitrogen gas was passed through the sample before melt sealing the NMR tube which was set in an oven at ca. 130 °C for about 4 hours and shaken (turning the NMR tube up/down). The temperature was raised to 150 °C for a few hours and subsequently cooled to 130 °C and kept at this temperature for 5-7 days (the sample was shaken at intervals of about 12 hours).

$^1H$-NMR

The measurement was performed at 127 °C with an acquisition time of 2s and a repetition time of 30 s. This repetition time was sufficient to ensure quantitative data sampling (measurements performed with a repetition time of 60 s resulted in the same quantitative results). The number of scans was set to 16 or 32, depending on the concentration of diene used to make the sample. Only the olefinic region of the spectrum (4-6.5 ppm) was analyzed. During post processing an exponential multiplication of the signal (FID) by 2 Hz was performed before Fourier transformation of the signal (64 K data points).

- he number of tertiary double bonds $RCH{=}CR_2$ was used to calculate the incorporation (wt% and mol%) of MOD and MPD.
- The morphology of the copolymers was observed by optical microscopy
- (X50 magnification) after melt pressing 2 g pellets to a disc of 12 cm diameter (H = homogenous, I = Inhomogeneous). Volume percent gels was estimated.
- The elongational rheological properties were tested on a standard Physica instrument in combination with SER-Extensional Rheology System by the method described in The Society of Rheology, 2005, 585-606. The measurements were performed at 180 °C and at different Hencky strain rates. The strain hardening at a certain Hencky strain rate was expressed as: $SH_{1.5/1.0} = (\log(\eta^e_{1.5}) - \log(\eta^e_{1.0}))/(\log(1.5) - \log(1.0))$ where log is Brigg's logarithm, and $\eta^e_{1.5}$ and $\eta^e_{1.0}$ are the elongation viscosities at 1.5 and 1.0 % strain respectively.

Experimental setup for strain hardening tests

A Paar Physica MCR300, equipped with a TC30 temperature control unit, an oven CTT600 (convection and radiation heating), a SERVP01-025 extensional device with temperature sensor and a software RHEOPLUS/32 v2.66 was used.

Sample Preparation

Stabilized pellets were compression moulded at 220°C (gel time 3 min, pressure time 3 min, total moulding time 3+3= 6 min) in a mould at a pressure sufficient to avoid bubbles in the specimen, cooled to room temperature and cut to strips (10 mm wide, 18 mm long, 0.7 mm thick).

SER Device Validation To ensure that the friction of the device was less than a threshold of $5x10^{-3}$ mNm (Milli-Newtonmeter) which is required for precise and correct measurements, the following procedure was performed prior to each measurement:

- The device was set to test temperature (180°C) for a minimum of 30 minutes without sample in presence of the clamps
- A standard test with 0.3 $s^{-1}$ was performed with the device on test temperature (180°C)
- The torque (measured in mNm) was recorded and plotted against time
- The torque must not exceed a value of $5x\ 10^{-3}$ mNm to make sure that the friction of the device is in an acceptably low range

Conducting the experiment

The device was heated for 20 min to the test temperature (180 °C measured with the thermocouple attached to the SER device) with clamps but without sample. Subsequently, the sample (0.7x10x18mm) was clamped into the hot device. The sample was allowed to melt for 2 minutes +/- 20 seconds before the experiment is started. During stretching (under inert atmosphere (nitrogen)) at constant Hencky strain rate, the torque was recorded as a function of time at isothermal conditions (measured and controlled with the thermocouple attached to the SER device). After stretching, the device was opened and the stretched film (which is wound on the drums) was inspected to confirm that homogenous extension occurred. It can be judged visually from the shape of the stretched film on the drums if the sample stretching has occurred homogenously. The film must me wound up symmetrically on both drums, and also symmetrically in the upper and lower half of the specimen. If symmetrical stretching is confirmed, the transient elongational viscosity can be calculated from the recorded torque as outlined above.

- Rheodynamic oscillation parameters Rheology of the polymers was determined by frequency sweep at 190 °C under nitrogen atmosphere according to ISO 6721-10, using Rheometrics RDA II Dynamic Rheometer with parallel plate geometry, 25 mm diameter plate and 1.2 mm gap. The measurements gave storage modulus (G'), loss modulus (G") and complex modulus (G*) together with the complex viscosity Eta, all as a function of frequency (ω). These parameters are related as follows: For any frequency ω: The complex modulus: $G^* = (G'2 + G"2)^{1/2}$. The complex viscosity: Eta= G*/ω The denomination used for modulus is Pa (or kPa) and for viscosity Pa s and frequency (1/s). Eta0.05 and Eta300 are the complex viscosities at a frequency of 0.05 and 300 $s^{-1}$ respectively. According to the empirical Cox-Merz rule, for a given polymer and temperature, the complex viscosity as function of frequency measured by this dynamic method is the same as the viscosity as a function of shear rate for steady state flow (e.g. a capillary). Shear thinning, that is the decrease of viscosity with increasing G*, becomes more pronounced when the molecular weight distribution (e.g. as measured by SEC) for linear polymers broadens. This property can be characterised by shear thinning indexes, SHI, which is the ratio of the viscosity at a lower G* and the viscosity at a higher G*. A polymer with broad molecular weight distribution will have a higher SHI than one with a more narrow. Two linear polymers of equal molecular weight distribution broadness as seen by SEC, but of different molecular weights, will have about equal SHI. SHI 5 /300 = (Eta at G* = 5 kPa)/ (Eta at G* = 300 kPa)

- PI, polydispersity index, is found as follows: The value of the modulus at the frequency where G' and G" are equal, $G_c$ (the crossover modulus) is found on the modulus - frequency plot. PI is then calculated as: PI = 100 000 Pa/$G_c$.

- Printability was determined by compression moulding pellets to 14 cm x 14 cm x 0.1 cm plates at 180 °C for 15 minutes. The plates were hung vertically and a Bunsen burner minute was moved back and forth along all samples for a period of 1 minute to heat them in air. Printability was then tested using ink 34 from AFS Entwicklungs + Vertriebs GmbH. Test ink 34 (article no. 12606) is a coloured liquid having a surface energy of 34 mN/m surface energy. This was applied by a brush to a rectangular portion of the upper part of the vertical heat treated plate

surface at 23 °C. After a period of 3 seconds, the surface was photographed to see the extent the surface was still wetted.

Experimental

General Procedures

Dienes

Inerted and capped Thomas bottles were taken from a glove box and the dienes were transferred into said bottles using syringes. The filled Thomas bottles were then returned to the glove box. To eliminate air and moisture from the dienes, the bottles were vented with nitrogen (oxygen level in the glove box is monitored) and at a low level of oxygen the liquids were transferred to new Thomas bottles containing regenerated molecular sieves (13X). The dienes are therefore free of moisture and oxygen.

**Example 1**

Catalysts

Catalyst A is Lynx200 available from Engelhard Corporation, Pasadena, USA. Catalyst B was made according to example 1 of EP-A-1378528

Polymerisation

Polymerisations were carried out in a stirred 3.41 Büchi reactor with isobutane slurry under the conditions shown in Table 1 below. 1,7-OD (1,7-octadiene) and MOD (7-methyl-1,6-octadiene) were used as diene comonomers.

The reactor was charged with solid catalyst. When catalyst B was used, the catalyst was fed as 20 %wt mud in mineral oil and in addition 4.8 mmol triethylaluminium (TEAL) was used as activator. Hydrogen (if used) was added as batch to the reactor, the hydrogen pressure tabulated is the initial partial pressure of hydrogen in the reactor before diluent was added. 1.7 litres isobutane was added as diluent along with the polyene and the stirrer started. The temperature was then increased to setpoint temperature and the reactor pressurised to setpoint pressure with ethylene. Ethylene was added during the run to maintain total pressure. At the end of the run, reactor pressure was let off. The resulting polymer powder was dried for 2 hours at 80 °C in a vacuum oven.

Extrusion

To the powder was added 1500 ppm by weight of B215 from Ciba and 500 ppm by weight of calcium stearate and it was pelletised in a Prism 16 mm twin screw extruder fitted with nitrogen flows to give oxygen level < 1000 vol. ppm at the screw feed entrance, at temperature 200 °C. The properties of the extruded polymer are shown in Table 1 below.

Table 1

| | | C1 | 1 | 2 | C2 | C3 | 3 | 4 | 5 |
|---|---|---|---|---|---|---|---|---|---|
| Catayst | | B | B | B | A | A | A | A | A |
| Amount of catalyst | g | 0.372 | 0.372 | 0.372 | 1.370 | 1.355 | 1.260 | 1.159 | 1.199 |
| Reaction temperature | °C | 80 | 80 | 80 | 90 | 90 | 90 | 90 | 90 |
| $H_2$ charge | bar | 0.15 | 0.15 | 0.15 | 0.0 | 0.0 | 0.0 | 0.0 | 0.0 |
| Pressure, total | bar gauge | 21 | 21.0 | 21.0 | 23.0 | 23.0 | 23.0 | 23.0 | 23.0 |
| Diene | Type | None | MOD* | MOD* | None | 1,7-OD# | MOD* | MOD* | MOD* |
| Diene charge | ml | 0 | 5 | 15 | 0 | 15 | 5 | 10 | 15 |
| Runtime | minutes | 60 | 60 | 60 | 45 | 45 | 35 | 45 | 35 |

(continued)

| | | C1 | 1 | 2 | C2 | C3 | 3 | 4 | 5 |
|---|---|---|---|---|---|---|---|---|---|
| Catayst | | B | B | B | A | A | A | A | A |
| Yield | g | 516 | 472 | 542 | 832 | 392 | 604 | 637 | 652 |
| Activity | g PE/ (gcat, h) | 1390 | 1270 | 1460 | 810 | 390 | 820 | 730 | 930 |
| **Data on powder before extrusion:** | | | | | | | | | |
| Eta0.05 | Pa s | 181 212 | 301 698 | 167 922 | | | | | |
| Eta300 | Pa s | 2503 | 2675 | 2416 | | | | | |
| MFR21 | g/10 min | 0.69 | 0.46 | 0.78 | 0.33 | 2.2 | 0.24 | 0.23 | 0.17 |
| Mw | | 370000 | 440000 | 360000 | 280000 | 460000 | 350000 | 410000 | 440000 |
| Density | g/dm$^3$ | 952 | 945 | 943 | 946 | 935 | 932 | 931 | 928 |
| **Data on pellets after extrusion:** | | | | | | | | | |
| Eta0.05 | Pa s | | | | 82282 | 130 151 | 136296 | 198 894 | 275641 |
| Eta300 | Pa s | | | | 3 187 | 2024 | 3233 | 3333 | 3391 |
| Total double bonds | 1/10 000 C | 0.60 | 1.69 | 6.64 | 1.04 | 3.54 | 5.86 | | 13.32 |
| Incorporated diene | 1/10 000 C | 0 | 0.90 | 5.40 | 0 | | 4.60 | | 11.70 |
| Diene content | %wt | 0 | 0.02 | 0.38 | 0 | | 0.37 | | 0.94 |
| Diene content | %mol | 0 | 0.01 | 0.10 | 0 | | 0.09 | | 0.23 |
| Homogeneity | | H | H | H | H | Coarse | H | H | H |
| Gels volume fraction | Vol. ppm | | | | | 5000 | 100 | 100 | 50 |
| $SH_{1.5/1.0}$ at 0.1 $s^{-1}$ | - | Break | | 0.450 | 0.221 | 1.267 | | | 1.010 |
| $SH_{1.5/1.0}$ at 1 $s^{-1}$ | - | 0.476 | | 0.509 | 0.324 | 1.379 | | | 0.588 |
| $SH_{1.5/1.0}$ at 10 $s^{-1}$ | - | Break | | 0.581 | Break | 0.644 | | | Break |
| * 7-methyl-1,6-octadiene # 1,7-octadiene | | | | | | | | | |

The results in Table 1 show the following:

- Catalyst activity is not decreased by adding MOD whereas addition of 1,7-OD decreased activity by a factor of about 3.
- The polymers made from the highest levels of MOD contained about 10 times the number of double bonds as those polymers made without any polyene.
- The polymers made from MOD exhibited better strain hardening behaviour than those polymers without diene. They have higher strain hardening values and fewer breaks.
- The homogeneity, as well as the level of gels, was much better in those polymers produced using MOD than with 1,7-OD. For instance, run 5 produced a polymer comprising 3 times as many double bonds as run C3 but had 50 times less gels.

**Example 2**

Catalyst

Catalyst B from Example 1 was used.

α-olefin comonomers

A mixture of 50/50 1-hexene and 1-butene was used as comonomers which are premixed in a sight glass before adding them to the reactor. An initial dose of 60 ml of the mixture from a cylinder is flushed to the reactor together with ethylene. After that a comonomer pump is used for continuous feeding during the polymerisation.

Polymerisation

Polymerisations were carried out in a 3.41 Büchi reactor in isobutane slurry.

i) The desired amount of diene was transferred to a syringe in the glove box before adding it to the small cylinder on the reactor with a counter flow of nitrogen.
ii) 0.186 g catalyst diluted in 20% mineral oil and 1.9 ml 1M Teal were transferred to syringes and transferred to the reactor with a counter flow of nitrogen, first the Teal and then the catalyst at 20 °C reactor temperature. Then hydrogen was added as a batch to the reactor.
iii) Half of the isobutane was filled into the reactor and the rest was used to flush the diene down into the reactor.
iv) The stirrer was started, at a speed of 600 RPM.
v) The ethylene feed was started at 75 °C. When the pressure reached 17 barg, the initial comonomer mixture (60 ml) from the vessel was flushed to the reactor together with the ethylene. At temperature 80 °C and pressure 21 barg, the sampling of ethylene consumption was begun and the comonomer pump was started. The pump was adjusted to 15 % of its full capacity, and the feed was in proportionality with the ethylene flow during the polymerisation. vi) When the runtime was finished the polymerisation was stopped automatically, i.e. stirrer was stopped and the gas vented off to the flare.
vii) The powder was dried for 2 hours at 80 °C in a vacuum oven to get rid of volatile residues in the polymers.

Extrusion

Extrusion was carried out in the same manner as described in Example 1. The properties of the extruded polymer are shown in Table 1 below.

| | | C1 | 1 | 2 |
|---|---|---|---|---|
| Reaction temperature | °C | 80 | 80 | 80 |
| H2 | bar | 0.15 | 0.15 | 0.15 |
| Pressure, total | bar | 21 | 21 | 21 |
| Catalyst | g | 0.186 | 0.186 | 0.186 |
| Teal | mmol | 1.9 | 1.9 | 1.9 |
| Al/Ti | mol/mol | 20 | 20 | 20 |
| MOD amount | ml | 0 | 5 | 10 |
| Runtime | min | 46 | 45 | 45 |
| Yield | g | 810 | 613 | 640 |
| Activity | g PE/(g cat,hr) | 5680 | 4390 | 4590 |
| Alpha olefin comonomer type | | Butene/hexene | Butene/hexene | Butene/hexene |
| Alpha olefin added after initial charge | ml | 193.15 | 132.4 | 153.9 |
| Estimated incorporation of diene* | mol% | 0 | 0.01 | 0.05 |

(continued)

| ANALYSES | | | | |
|---|---|---|---|---|
| MFR2 | g/10 min | 0.1 | 0.1 | 0.17 |
| Eta 0.05 | Pa s | 68433 | 69367 | 41526 |
| Eta 300 | Pa s | 1951 | 1976 | 1748 |
| PI | - | 0.82 | 0.8 | 0.76 |
| SHI 5/300 | - | 3.2 | 6.5 | 5.9 |
| Density | $g/dm^3$ | 924 | 925 | 926 |
| *Based on runs 1 and 2 of Example 1 | | | | |

Printability Test

The same surface area of compression moulded plates of polymers C1 and 1 were wetted with ink using a brush. In the case of the plate comprising polymer 1, the originally wetted area was still wet after 3 seconds (see Figure 1 a where the wetted area is seen as a rectangular area at the top, with the wetter layer being thin at the top and thicker at the bottom due to gravity). In the reference case (plate of polymer C1), after 3 seconds only about 10 % of the originally wetted area was still wet (as three droplets), while about 90 % was completely dry (see Figure 1b).

A similar printability test was also done before heat treating the plate by the burner. In this case, there was no difference in wettability between the samples.

This wettability was intermediate between the wettability levels of the two samples after heat treatment.

The internal double bond in MOD that remains unreacted in the polymer after polymerisation has low reactivity versus vinylic groups. This was confirmed in the case of the non heated plate. However, this bond is obviously reactive during the high temperature treatment to result in a large, advantageous wetting improvement. This advantage is achieved even when low levels of diene are incorporated into the polymer.

## Claims

1. An ethylene polymer having a weight average molecular weight of at least 120,000 comprising 1-50 tertiary double bonds per 10,000 carbon atoms.

2. An ethylene polymer as claimed in claim 1 comprising 1-25 tertiary double bonds per 10,000 carbon atoms.

3. An ethylene polymer as claimed in claims 1 or claim 2, wherein said tertiary double bonds comprise a unit derived from a tertiary diene.

4. An ethylene polymer as claimed in claim 3 comprising less than 0.5 mol% of a unit derived from a tertiary diene.

5. An ethylene polymer as claimed in claim 3 or claim 4 wherein said tertiary diene is not a 1,4-diene.

6. An ethylene polymer as claimed in any one of claims 3 to 5 wherein said tertiary diene is of formula I:

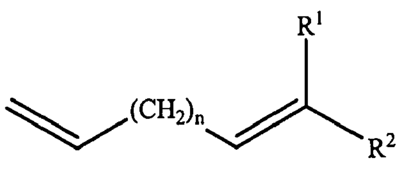

(I)

wherein n is an integer from 0 to 20, preferably 0 to 4 (e.g. 0 or 3); and $R^1$ and $R^2$ are each independently a $C_{1-6}$ alkyl group.

**7.** An ethylene polymer as claimed in claim 6 wherein said diene is selected from 7-methyl-1,6-octadiene and 4-methyl-1,3-pentadiene.

**8.** An ethylene polymer as claimed in any preceding claim comprising at least 80 mol% units derived from ethylene.

**9.** An ethylene polymer as claimed in any preceding claim comprising less than 10 %mol units derived from propylene.

**10.** An ethylene polymer as claimed in any preceding claim comprising units derived from but-1-ene, hex-1-ene or a mixture thereof.

**11.** An ethylene polymer as claimed in any preceding claim having a $MFR_2$ of less than 1.

**12.** An ethylene polymer as claimed in any preceding claim having a melting point of greater than 115 °C, preferably greater than 120 °C.

**13.** An ethylene polymer as claimed in any preceding claim having a degree of crystallinity of at least 40 %, preferably at least 45 %.

**14.** An ethylene polymer as claimed in any preceding claim having less than 0.5 % vol gels.

**15.** An ethylene polymer as claimed in any preceding claim which has a $SH_{1.5/1.0}$ at a Hencky strain rate of 0.1 $s^{-1}$ of at least 0.4.

**16.** An ethylene polymer as claimed in any preceding claim which has a $SH_{1.5/1.0}$ at a Hencky strain rate of 1 $s^{-1}$ of at least 0.5.

**17.** An ethylene polymer as claimed in any preceding claim which has a $SH_{1.5/1.0}$ at a Hencky strain rate of 10 $s^{-1}$ of at least 0.5.

**18.** An ethylene polymer as claimed in any preceding claim which is multimodal (e.g. bimodal) with respect to molecular weight distribution.

**19.** A process for preparing an ethylene polymer as claimed in any one of claims 1-18 comprising copolymerising ethylene and a tertiary diene.

**20.** A composition comprising an ethylene polymer as claimed in any one of claims 1-18.

**21.** An article (e.g. a moulded or extruded article) comprising an ethylene polymer as claimed in any one of claims 1-18.

**22.** A process for preparing an article as claimed in claim 20 comprising moulding or extruding an ethylene polymer as defined in any one of claims 1-18.

**23.** Use of an ethylene polymer as claimed in any one of claims 1-18 in moulding or extrusion.

**24.** Use of an ethylene polymer as claimed in any one of claims 1-18 in the manufacture of a long chain branched ethylene polymer.

**25.** A long chain branched ethylene polymer obtainable from an ethylene polymer as claimed in any one of claims 1-18 by post reactor treatment (e.g. with a free radical initiator).

**26.** A process for preparing a long chain branched ethylene polymer as claimed in claim 25 comprising:

(i) copolymerising ethylene and a tertiary diene to produce an ethylene polymer having a weight average molecular weight of at least 120,000 comprising 1-50 tertiary double bonds per 10,000 carbon atoms; and
(ii) treating said copolymer (e.g. with a free radical initiator) to introduce long chain branching.

**27.** A composition comprising a long chain branched ethylene polymer as claimed in claim 25.

**28.** Use of a long chain branched ethylene polymer as claimed in claim 25 in moulding or extrusion.

**29.** A process for preparing an article comprising moulding or extruding a long chain branched ethylene polymer as claimed in claim 25.

**30.** A moulded or extruded article comprising a long chain branched ethylene polymer as claimed in claim 25.

FIGURE 1a

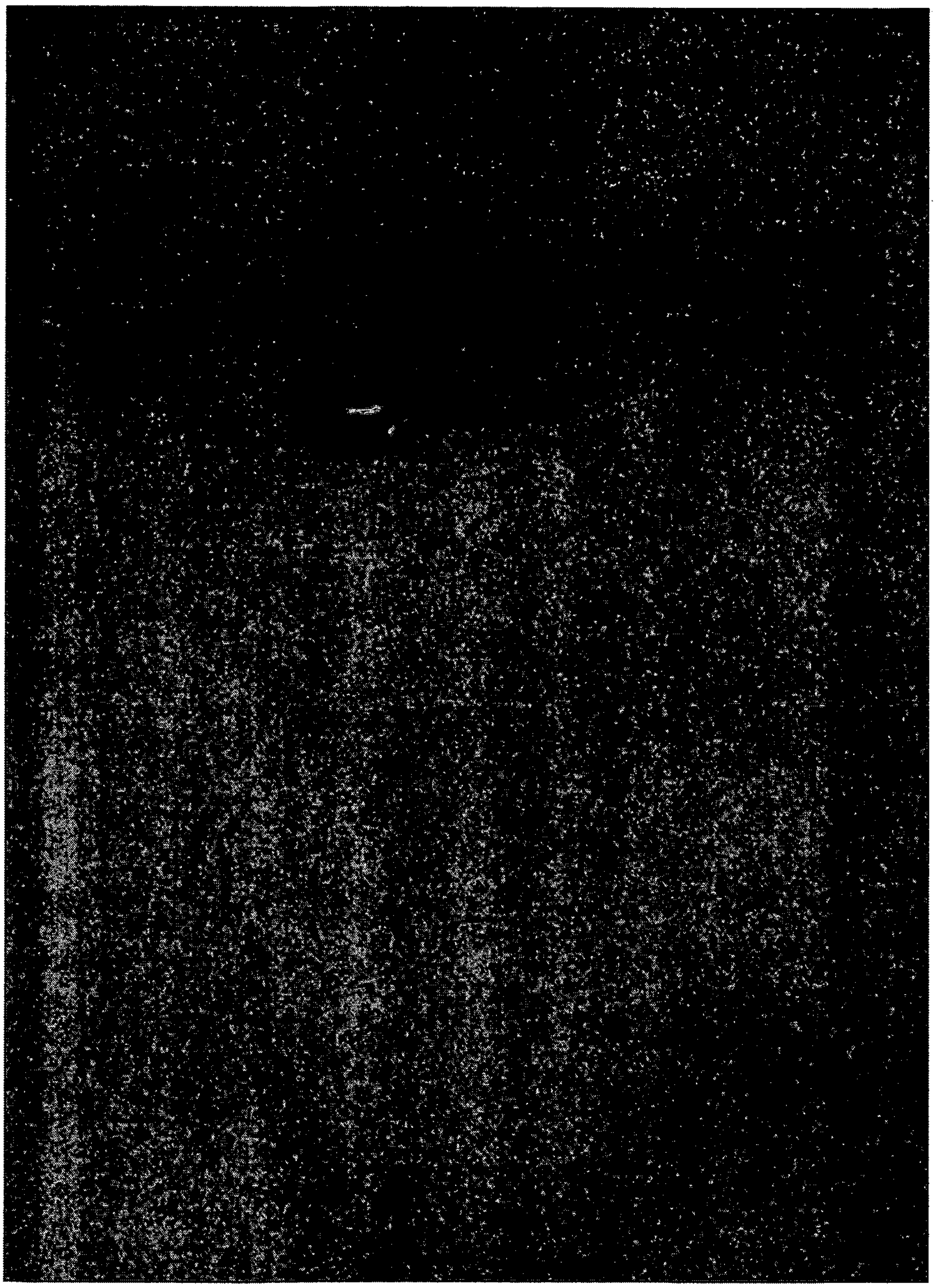

FIGURE 1b

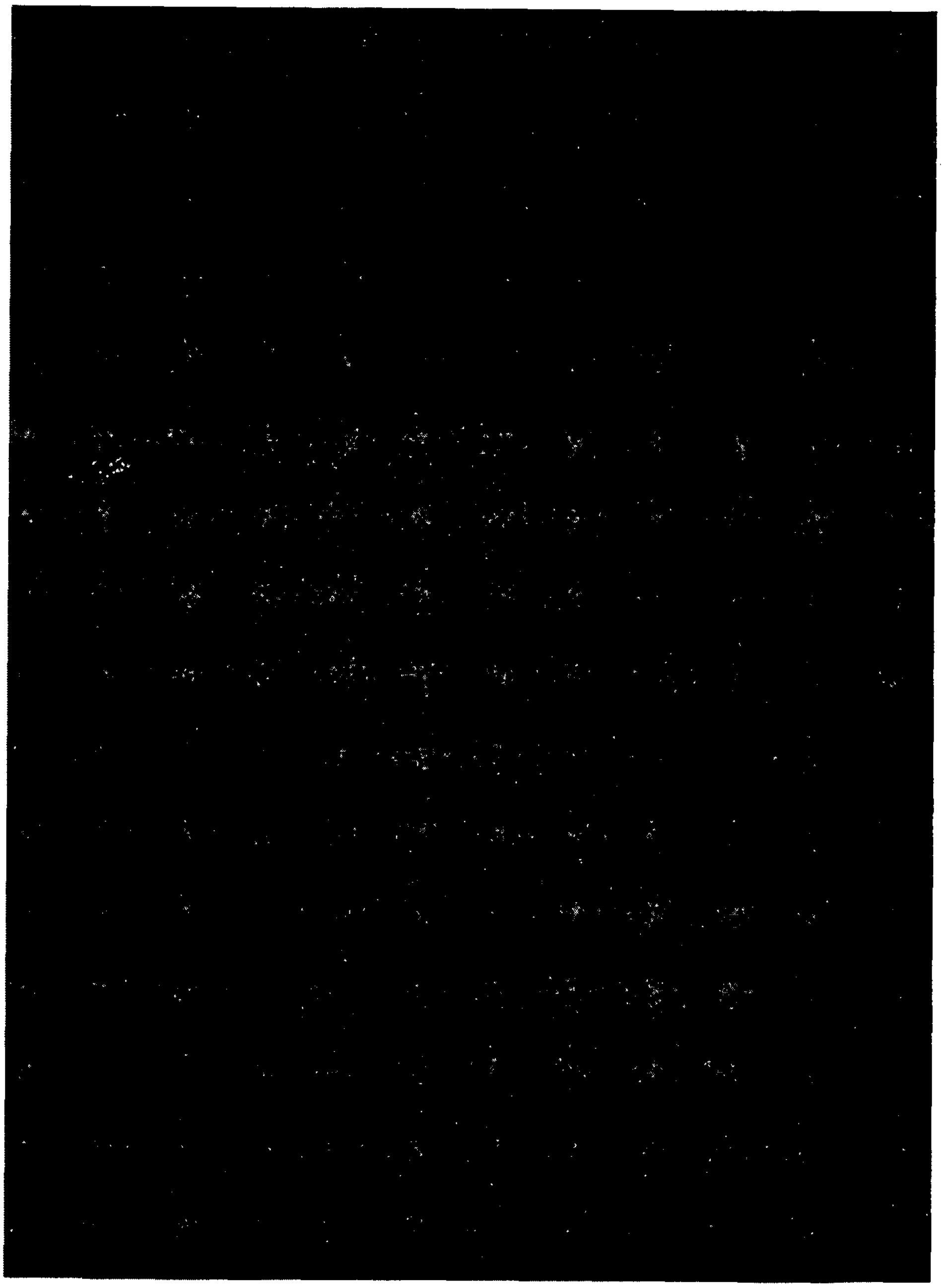

European Patent Office

# EUROPEAN SEARCH REPORT

Application Number
EP 07 25 4417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 97/01586 A (DSM NV [NL]; RENKEMA JACOB [NL]; MUSKENS BERNARDUS JOHANNA [NL]; OOSTE) 16 January 1997 (1997-01-16)<br>* page 1, lines 6-10 *<br>* page 6, lines 13-17 *<br>* page 6, line 28 *<br>* page 6, line 31 *<br>* page 7, line 13 *<br>* page 7, line 28 - page 8, line 1 *<br>* page 8, lines 10-12 *<br>* page 8, lines 23-29 *<br>* example 7 *<br>* table 3 *<br>----- | 1,2,19, 20,25,27 | INV.<br>C08F210/02<br>C08F210/16<br>C08F210/18<br>C08F236/20 |
| X | WO 99/41294 A (EXXON CHEMICAL PATENTS INC [US]) 19 August 1999 (1999-08-19)<br>* page 3, lines 15-17 *<br>* page 5, line 21 *<br>* page 6, line 18 *<br>* example C3 *<br>* table 3 *<br>----- | 1,2,8,9, 18,19 | |
| | | | TECHNICAL FIELDS SEARCHED (IPC) |
| X | US 5 922 823 A (SAGANE TOSHIHIRO [JP] ET AL) 13 July 1999 (1999-07-13)<br>* column 1, lines 9-21 *<br>* column 3, lines 9,10 *<br>* column 4, lines 61-67 *<br>* column 5, lines 59-61 *<br>* column 6, lines 19-21 *<br>* column 7, lines 10-13 *<br>* column 23, lines 53-56 *<br>* column 27, lines 32,33 *<br>* column 27, line 39 *<br>* column 27, lines 50-55 *<br>* column 29, lines 18-45 *<br>* column 31, lines 57-63 *<br>* column 33, lines 3-16 *<br>* example 1 *<br>* tables 2,3 *<br>----- | 1-8,10, 19-30 | C08F |

The present search report has been drawn up for all claims

3

| Place of search | Date of completion of the search | Examiner |
|---|---|---|
| The Hague | 27 March 2008 | Queste, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 07 25 4417

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2008

| Patent document cited in search report | Publication date | Patent family member(s) | Publication date |
|---|---|---|---|
| WO 9701586 A | 16-01-1997 | AU 6244596 A | 30-01-1997 |
| | | BR 9609483 A | 02-03-1999 |
| | | CA 2225742 A1 | 16-01-1997 |
| WO 9941294 A | 19-08-1999 | BR 9907267 A | 14-11-2000 |
| | | CA 2319008 A1 | 19-08-1999 |
| | | CN 1291206 A | 11-04-2001 |
| | | DE 69909757 D1 | 28-08-2003 |
| | | DE 69909757 T2 | 15-04-2004 |
| | | EP 1056792 A1 | 06-12-2000 |
| | | ES 2203074 T3 | 01-04-2004 |
| | | JP 2002503736 T | 05-02-2002 |
| US 5922823 A | 13-07-1999 | US 5807948 A | 15-09-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4366296 A
- EP 0552946 A
- US 4336296 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A
- WO 9535323 A
- WO 0155230 A
- WO 2004000933 A
- EP 810235 A
- WO 9951646 A
- EP 0810235 A
- EP 1378528 A


### Non-patent literature cited in the description


- **K. K. MCAULEY ; J. F. MCGREGOR.** On-line Inference of Polymer Properties in an Industrial Polyethylene Reactor. *AIChE Journal,* June 1991, vol. 37 (6), 825-835